# EUROPEAN PATENT APPLICATION

(11) **EP 2 509 309 A1**
(43) Date of publication of application: **10.10.2012**
(21) Application number: 12160193.4
(22) Date of filing: 19.03.2012
(51) Int. Cl.: H04N 7/14

(54) **Direct eye-contact enhancing videoconferencing unit**

(30) Priority: 05.04.2011 US 201113080409
(71) Applicant: POLYCOM, INC., Pleasanton, CA 94588 (US)
(72) Inventor: Smith, Herbert James, Sarasota, FL Florida 34243 (US); Padgett, William David, Marietta, GA Georgia 30068 (US)
(74) Representative: Käck, Stefan

(57) **Abstract**

A desktop videoconferencing endpoint (200) for enhancing direct eye-contact between participants can include a transparent display device (202) and a camera (204) placed behind the display device (202) to capture images of a near end participant (105) located in front of the display device (202). The display device (202) can alternate between display states and non-display states. The camera (204) can be operated to capture images of the near end participant (105) only when the display device (202) is in the non-display state. The camera (204) can be placed behind the display device (202) at a location where an image of eyes of the far end participant is displayed. Images captured by the camera (204) when displayed at to the far end participants can give the perceived impression that the near end participant (105) is making direct eye-contact with the far end participant.

## Description

### FIELD OF THE INVENTION

The present invention relates generally to communication systems, and more particularly to video conferencing units.

### BACKGROUND

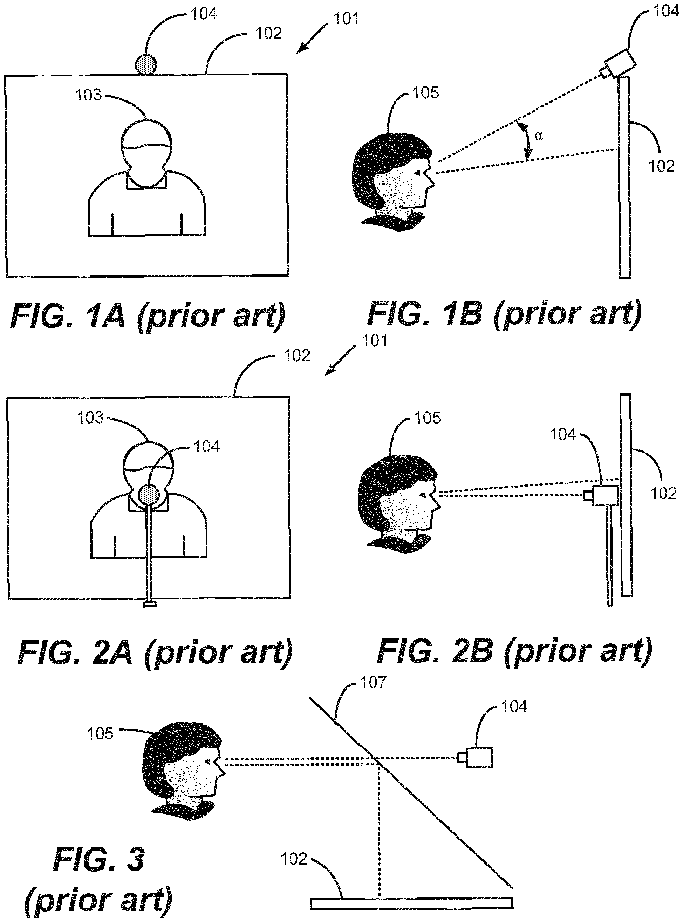

FIGS. 1A-1B show one arrangement of a camera and a display screen in a videoconferencing unit 101. FIG. 1A shows a front view of a display screen 102 displaying an image 103 of the far end participant. Camera 104 is placed on top of the display screen 102 for capturing an image of a near end participant 105. Typically, while communicating, the near end participant 105 will look into the eyes of the far end participant displayed on the display screen 102. The exact location on the display screen 102 where the far end participant's eyes appear may vary; but, generally, they may appear anywhere above the half and below two-thirds of the height of the display screen 102. The camera 104 is however placed at the top of the display screen 102. Therefore, the image of the near end participant 105 captured by camera 104 will appear as if the near end participant 104 is looking downwards. As a result, the far end participants will see the image of the near end participant looking not straight out at them, but undesirably downwards. If the far end videoconferencing unit has a similar setup as shown for the near end videoconferencing endpoint in FIG. 1A, then the image of the far end participant captured by the far end camera will also suffer from the same downward looking feature. In such cases, both the near end and far end participants will not be able to make direct eye contact with the images of the other end. Naturally, this is undesirable.

Note that the downward looking effect gets worse with an increase in the angle α subtended at the eyes of the near end participant 105 by the near end camera and a location on the display screen 102 where eyes of the far end participant are displayed. Angle α is a function of two distances: (i) the horizontal distance between the near end participant 105 and the display screen 102 and (ii) the perceived distance (in a vertical plane) between the camera 104 and the location on the display screen 102 where the far end participant's eyes are displayed. Angle α is inversely proportional to the horizontal distance, i.e., angle α decreases with increase in the distance between the near end participant and the display screen. Further, angle α is directly proportional to the perceived distance, i.e., angle α decreases with decrease in the perceived distance between the camera and the location on the display screen where the eyes of the far end participant are displayed. It will be appreciated by a person skilled in the art that the apparent lack of direct eye contact decreases with the decrease in angle α. Typically, a value of angle α that is less than or equal to approximately 5 degrees is sufficient in rendering the apparent lack of direct eye contact to imperceptible levels.

There are several solutions in the prior art that attempt at solving the above problem of apparent lack of direct eye contact. One such solution is shown in FIGS. 2A and 2B. In this method, the camera 104 is placed in front of the display screen 102 at a location that is proximal to the location on the display screen 102 where the eyes of the far end participants are displayed. As a result, the perceived distance to which angle α is directly proportional to, decreases - decreasing angle α. Consequently, when the image of the near end participant 105 is displayed at the far end, it appears as if the near end participant is making direct eye contact with the far end participants. Yet, the solution presented in FIGS. 2A and 2B suffers from the drawback of blocking the near end participant's 105 view of display screen 102. As can be seen in FIG. 2A, the camera 104 and the camera support 106 impede the view of the image of the far end participant. The camera 104 and camera support can be extremely distracting for the near end participant 105.

Another solution is presented in FIG. 3, in which a teleprompter style display and camera setup minimizes angle α. The display screen 102 is placed horizontally over which a half-silvered mirror 107 of substantially same width as the display screen 102 is placed in a manner such that the image displayed on the display screen 102 is reflected off the mirror 107 and visible to the near end participant 105. Camera 104 is placed behind the mirror 107 so that although the near end participant 105 is visible to the camera 104, the camera 104 is not visible to the near end participant 105. Camera 104 is placed at a height at which the eyes of the far end participants are anticipated to appear on the mirror 107 as seen by the near end participant 105. Consequently, the angle α is minimized, and in the image captured by the camera 105 when displayed to the far end participant, it appears as if the near end participant is making direct eye contact with the far end participant. However, the horizontal placement of the display screen 102 and the angled mirror 107 occupy considerably more space. As a result, such a setup is ill-suited to a desktop videoconferencing unit.

### SUMMARY

The invention is defined in independent claims 1 and 10, respectively. Particular embodiments are set out in the dependent claims.

In particular, a desktop videoconferencing endpoint can enhance the perception of direct eye-contact between near end and far end participants. The endpoint can include a transparent display device and a camera placed behind the display device. The camera is located behind the display device at a location where an image of eyes of the far end participant is anticipated to be displayed. Typically, a near end participant will communicate while looking at a location on the display device where the image of the eyes of the far end participant is displayed. With the camera behind this location, the images captured by the camera can include the near end participant looking directly at the camera. When the captured images are displayed to the far end participants, the far end participants can perceive that the near end participant is making direct eye-contact with the far end participants.

The transparent display device can include an organic light emitting diode (OLED) pixel matrix on a transparent substrate such as glass or plastic. Such a display device can allow light to pass through the display device. A control unit coupled to the display device can alternate the display device between a display state and a non-display state. In the display state the display device can display an image. For example, the displayed image can be an image frame received from the far end. In the non-display state, the display device can stop displaying any images. As a result, the display device becomes transparent. The control unit can operate the camera to capture an image of the near end participant through the display device while the display device is in the non-display state. Because the display device is not displaying an image, the camera can capture the near end participant without any impediment. The camera can be enclosed in an enclosure to block and ambient light falling on the camera. This can make the camera imperceptible to the near end participant.

The camera can be operated to capture or not capture images by opening and closing its shutter. The shutter can be opened only during the non-display state of the display device. However, the shutter can be operated to open only during some of the non-display states. Whether the camera opens the shutter during the non-display state depends upon various factors such as capture frame rate, exposure time, etc.

The videoconferencing endpoint can also include a camera positioning mechanism that can automatically position the camera behind the location on the display device where the image of the eyes of the far end participant appears. A face detect module can determine the position of the image of the eyes on the received image frame. A camera position controller can determine the physical location of the image of the eyes from the pixel information received from the face detect module. The camera can be mounted on a positioning mechanism that can allow displacing the camera in both horizontal and vertical direction behind the display device. The camera position controller can control the positioning mechanism so that the camera is positioned at a location behind the image of the eyes appearing on the display device. The camera position controller can track the changes in the location of the image of the eyes on the display device, and accordingly alter the position of the camera.

### BRIEF DESCRIPTION OF THE DRAWINGS

Exemplary embodiments of the present invention will be more readily understood from reading the following description and by reference to the accompanying drawings, in which:

FIGS. 1A and 1B show a videoconferencing endpoint where the camera is located on top of the display screen, as known in the prior art;

FIGS. 2A and 2B show a videoconferencing endpoint where the camera is located in front of the display screen, as known in the prior art;

FIG. 3 illustrates a teleprompter style videoconferencing endpoint known in the prior art;

FIG. 4 illustrates an exemplary videoconferencing endpoint where the camera is located behind a transparent display device;

FIGS. 5A and 5B illustrate a display state and a non-display state of the display device;

FIG. 6 shows an exemplary timing diagram for the display device and the camera;

FIG. 7 lists exemplary values for times shown in the timing diagram;

FIG. 8 shows a flowchart for the exemplary steps carried out by a control unit coupled to the display device and the camera;

FIG. 9A - 9C provide an exemplary illustration, block diagram, and flowchart for a movable camera mechanism; and

FIG. 10 illustrates an exemplary schematic of the videoconferencing endpoint.

### DETAILED DESCRIPTION

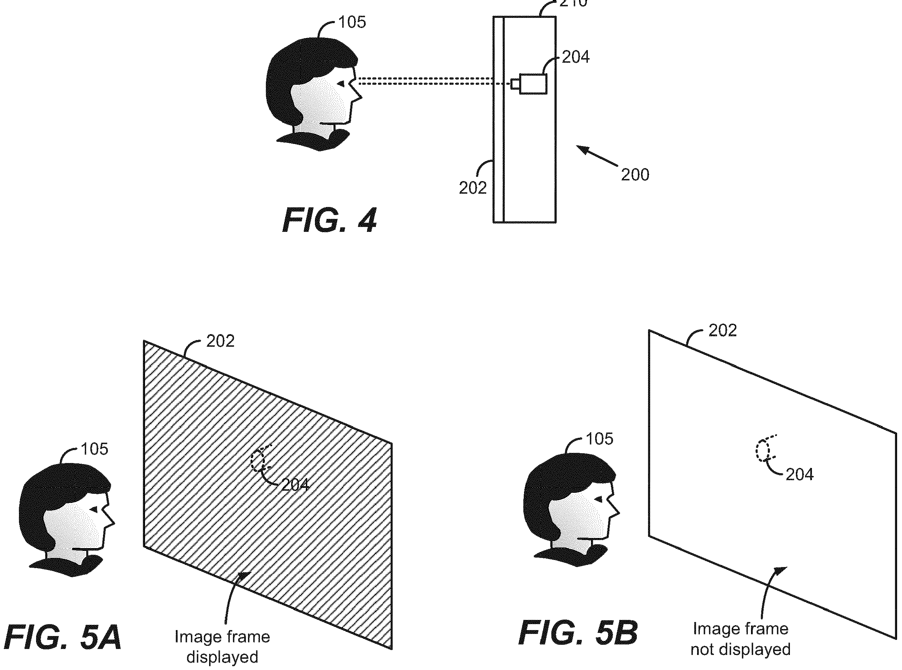

FIG. 4 shows an example of a videoconferencing unit 200 where the camera can be placed behind the display device. Camera 204 can be placed on the side of the display device 202 that is opposite to the side facing the near end participant 105. The display device 202 can be capable of achieving a state in which it does not display a frame to the participant 105 and allows light from the participant's side of the display device 202 to be passed through to the camera side of the display device 202. During this state, camera's 204 shutter can be open so that it can capture an image of the near end participant 105 and his/her surroundings. The display device 202 can also be capable of achieving a state in which it displays a frame to the participant 105. During this state, the camera's 204 shutter can be closed so that it does not capture any image. The display device 202 can be moved between these two states rapidly enough for both the display device 202 to display video frames and the camera 204 to capture video frames at their desired frame rates.

Camera 204 can be placed just behind a location on the display device 202 where an image of the face or eyes of the far end participant are anticipated to appear. As a result, the angle α subtended on the near end participant 105 will be very small. Consequently, the images of the near end participant 105 captured by camera 204 when displayed at the far end, will appear as if the near end participant is making direct eye contact with the far end participants. The camera 204 can be located such that the angle α is less than 5 degrees.

Camera 204 can also be enclosed in an enclosure 210 as shown in FIG. 4. It is desirable that camera 204 located behind the display device 202 is imperceptible to the local participant 105. The enclosure 210 can minimize the amount of light falling on camera 204. The inner surface of the enclosure 210 can have a non-reflective coating and color (e.g., matte-black). Even the camera 204 can be coated with the non-reflective coating and color to further reduce its perceptibility. The camera 204 can be placed close behind the screen to allow a wide view of the local participant 105 and his/her surroundings. It can be advantageous to have the thickness of the display device 202 and the enclosure 210 to be as small as possible so that the display device 202 along with the enclosure 210 can be placed on a desktop in front of the local participant. With typical commercial display screens being available in thicknesses of a fraction of an inch (2.54 cm), and with high definition digital cameras also available in form factors of up to 1-2 inches (2.54 - 5.08 cm) thick, the thickness of the endpoint shown in FIG. 4 can be less than 2-3 inches (5.08 - 7.62 cm).

Several display devices such as organic light emitting diodes (OLED) displays, liquid crystal displays (LCD), etc. can be employed as the display device 202. A person skilled in the art will appreciate that OLED and LCD displays can be fabricated on transparent or semi-transparent sheets of glass or plastics. This makes OLED displays substantially transparent, while at the same time allowing the displays to show and image on the substantially transparent substrate.

FIGS. 5A and 5B show the two states of the display device and camera. In FIG. 5A, the display device 202 can be in a display state and display an image of the far end participant (indicated by shading). In this state, the camera 204 can have its shutter closed so that the camera does not capture the image that is displayed on the display device 202. Note that the camera 204 is shown with broken lines to indicate that the camera 204 can be imperceptible to the local participant 105. In FIG. 5B the display device 202 can be configured to be in a non-display or transparent state such that it does not display any image. As a result, the camera 204 can have a clear view of the local participant 105 from behind the transparent display device 202. The camera shutter can then be opened to capture an image of the local participant 105. The camera shutter can be closed again before the display device 202 displays another frame of the image of the far end participants. Typically, the display device 202 and the camera 204 can repeatedly alternate between the two scenarios shown in FIGS. 5A and 5B.

As an alternative, only a portion of the display device may be made transparent during the transparent state. The portion of the display device 202 that is made transparent can correspond to the location of the camera 204. Because the camera 204 can be placed close behind the display device 202, the entire display device may not be needed to be transparent for the camera 204 to be able to capture the entire view of the local participant 105 and his/her surroundings. As an example, a rectangular, circular, or square portion of the display device 202 in front of the camera 204 can be selected. Pixels corresponding to the selected portion can be identified while setting up the camera 204 behind the display device 202. The location of the identified pixels can be stored in the display device 202 memory or supplied by a control unit during each refresh cycle.

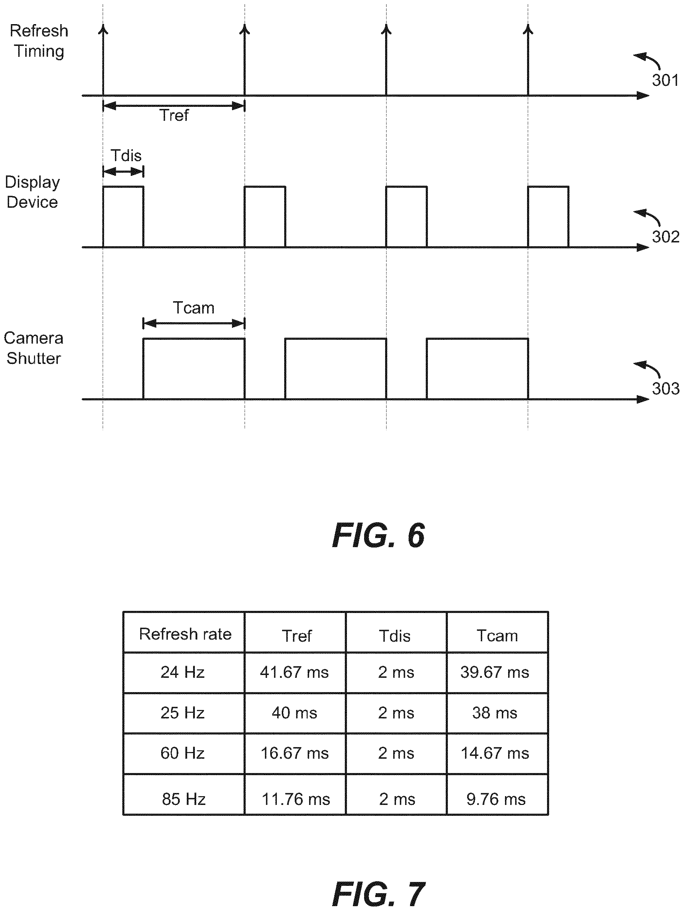

FIG. 6 illustrates, with the aid of a timing diagram, an example of the operation of the display device and the camera. The topmost axis shows the refresh timing 301 of the far end video to be displayed by the display device 202. The refresh rate Tref of the display device 202 can be same as the capture rate of the incoming video. For example, if the incoming video is captured at 24 frames per second (fps), then the refresh rate of the display device 202 can be set to 24 Hz, such that one image frame is displayed in each cycle. In some cases the refresh rate of the display device can be independent of the frame rate of the incoming video. For example, some display devices can set their display refresh rate to a constant value of 60 Hz. In such cases, an image frame may be displayed in more than one cycle.

Portion 302 of the timing diagram 300 shows duration of time Tdis required to display a frame on the display device 202 and to subsequently remove the frame on the display device 202 and turn it transparent. Tdis can depend upon several latency factors such as the input lag, pixel response time, etc. Input lag may depend upon the latency of the electronics to transfer pixel data from the memory to the pixels. Typical pixel response time for OLED displays is 1 ms, and that for LCD displays is 2-4 ms. It can be assumed that at all times other than Tdis within a refresh cycle, the display device 202 is transparent. In other words, the display device 202 can enter a transparent state after Tdis.

Portion 303 shows the duration of time that the camera shutter can potentially remain open in a refresh cycle for capturing the image of the local participant. Tcam provides the duration of time within a refresh cycle when the display device 202 is transparent - allowing the camera 204 open its shutter to capture an image of the local participant. Note that Tcam may not necessarily define the shutter duration of the camera 204. In other words, it is not necessary that the camera shutter will be open during each Tcam period in each refresh cycle. For one, camera 204 may have a capture frame rate that is different from the display refresh rate. For example, if the capture frame rate of camera 204 is 24 fps, and the refresh rate of the display device is 50 Hz, then the camera shutter may be open only during the Tcam duration of 24 of the 50 refresh cycles per second. Additionally, the shutter duration can also be a function of the camera sensor speed and the amount of light reaching the camera sensor, or exposure time. For example, if the camera needs to keep the shutter open for 1/100^{th} of a second per frame, then the camera shutter may be open for only 10 ms within the allowable duration of Tcam. If Tcam is shorter than the required exposure time, the shutter may be open during multiple Tcam durations for capturing a single frame. In some cases Tcam can be so short (e.g., with high refresh rates) that it may not allow the camera to capture the required frames per second at the required exposure time, then the control unit can provide an indicator to the local participant. The local participant may increase the local illumination in order to reduce the exposure times. Alternatively, the control unit may automatically send instructions to a room lighting control unit to turn on additional lights.

FIG. 7 lists a few exemplary values of the durations discussed in FIG. 6. For example, if the refresh rate for the display device 202 is 24 Hz, then the duration Tref will be 41.67 ms. It is assumed that Tdis is equal to 2 ms, however, any other appropriate value for a particular display can be used. Because Tcam = Tref - Tdis, Tcam is equal to 39.67 ms. Thus, the camera shutter can be open for 39.67 ms in a refresh cycle. As expected, the duration Tcam reduces with the increase in refresh rate. For example Tcam durations corresponding to refresh rates of 25 Hz, 60 Hz, and 85 Hz, are 38 ms, 14.67 ms, and 9.76 ms, respectively.

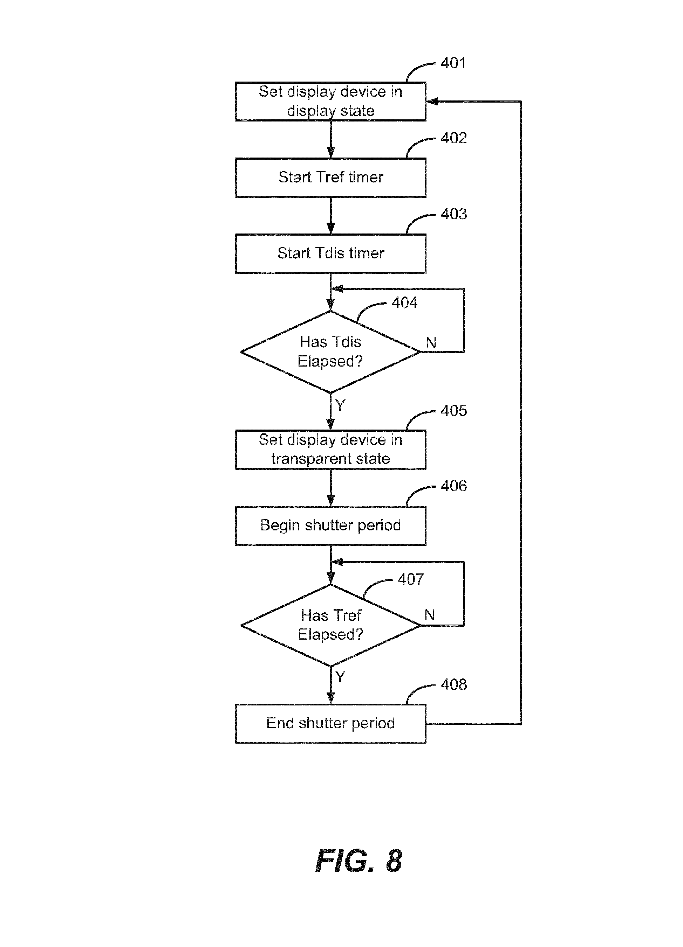

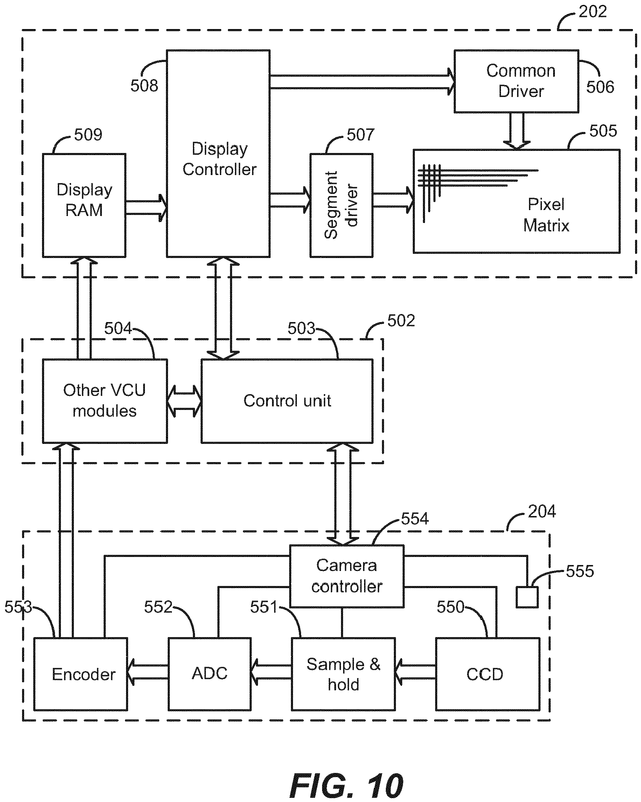

FIG. 8 shows a flowchart of one exemplary operation of a control unit (shown in FIG. 10). In step 401, the control unit can set the display device in a display state. As discussed before, the display state, the display device 202 can display an image frame to the local participant 105. In steps 402 and 403, the control unit can start two timers, one related to the refresh cycle Tref and the other related to the display duration Tdis. Note that it can take the display device 202 duration Tdis to display an image frame to the local participant 105 and to subsequently enter a transparent state. The control unit can wait in state 404 until duration Tdis has elapsed. Subsequently, in step 405, the control unit can put the display device 202 in a transparent state.

In step 406, the control unit can begin the shutter period. At this time the control unit can send a signal to the camera 204 indicating that the shutter, if necessary, can be opened. Camera 204 can determine the duration of time for which the shutter needs to be opened. As discussed before, whether the camera 204 decides to open the shutter, and if opened for how long, can depend upon the various factors such as capture frame rate, exposure time, etc.

In step 407, the control unit waits for the next refresh cycle to arrive. Once Tref duration has elapsed, the control unit can send (in step 408) a signal to the camera 204 to indicate that the shutter needs to be closed. Subsequently, the control unit can return to step 401 where the next refresh cycle can begin.

Referring again to the videoconference unit 200 in FIG. 4, camera 204 can be placed just behind a location on the display device 202 where the image of face or eyes of the far end participant are anticipated to appear. In one example, the videoconference unit 200 can include a mechanism to determine the approximate location on the display device where the image of the face or eyes of the far end participant appears. Furthermore, the camera 204 position behind the display device can be controllably adjusted to track the determined approximate location. Thus, during the course of videoconferencing if the location of the images of the face or eyes of the far end participant changes, the location of the camera 204 behind the display device 202 can be changed as well.

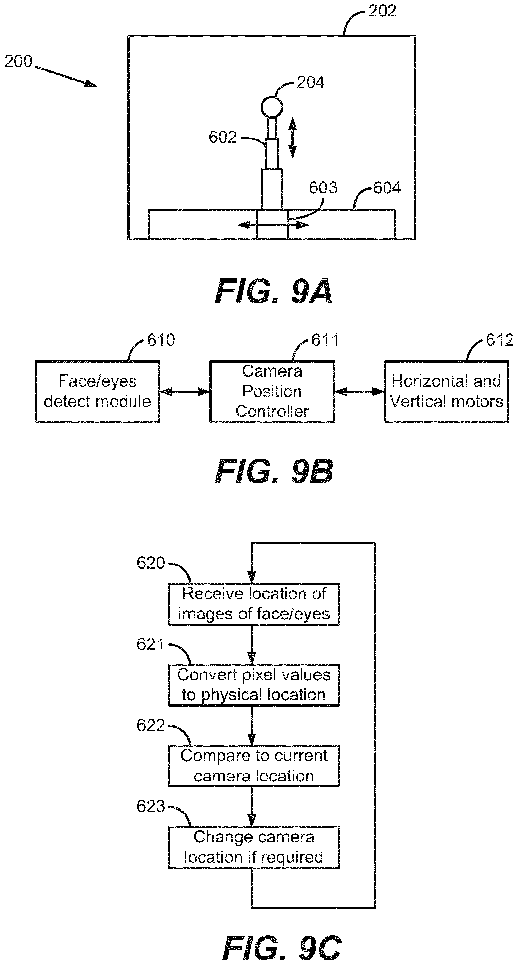

FIG. 9A illustrates an exemplary videoconferencing unit 200 with a movable camera mechanism. Camera 204 can be mounted on a telescopic arm 602, which can provide vertical displacement of camera 204. The telescopic arm 602 can itself be mounted on a rail 604, which provides horizontal displacement. Movement of the telescopic arm 604 in the vertical direction and in the horizontal direction on rail 604 can be affected by using motors, such as, DC motors, stepper motors, etc., in addition to gears, belts, etc. Control signals for moving the camera 204 in the horizontal and/or vertical direction can be provided by a camera position controller 611 (FIG. 9B).

A face detect module 610 (FIG. 9B) can detect the location of a face and eyes within an image. For example, in one technique, the face detect module 610 can use algorithms for face detection within each frame of the received far end video. Face detection algorithms can localize faces within an input image. Typically, a face detection system can include a set of classifiers that have been previously trained (using machine learning methods such as neural networks, etc.) to classify the input pattern associated with features such as a face or a non-face. A fixed size window can scan every location within an image and extract image patterns that can be passed through classifiers to check for existence of a face. Similarly, the face detection algorithm can also detect eyes within the face with the aid of a set of classifiers that have been trained to detect eyes within a face. Once a face and/or eyes are recognized, the regions in the image where the face and/or eyes exist can be monitored for movement for tracking the face. The location of pixels associated with the detected face and/or eyes of the far end participant can be determined and provided to the camera position controller 611.

Camera position controller 611 can transform the location of the face/eyes from a representation in terms of pixel locations to a representation in terms of physical location behind the display device 202. Values for the transformation can be pre-calibrated and stored in memory as a look-up table. For example, any pixel location on the display screen can be mapped to a horizontal and a vertical coordinate value. The position controller 611 can store the mapping of each pixel value in memory. Alternatively, the position controller 611 can store the mapping of only a single pixel value, and calculate the mapping of any other pixel value based on its offset from the stored pixel value and the dimensions of the display device 202. The face detect module 610 and the camera position controller 611 can be part of the video conferencing unit 502, shown in FIG. 10. Alternatively, the camera position controller 611 can also reside in the camera controller 554, shown in FIG. 10.

Once the horizontal and vertical displacement values have been determined, the position controller 611 can control the horizontal and vertical mechanism to reposition the camera 204. As an example, block 612 shows that motors are used to operate the exemplary telescopic arm 602 and rail 604.

FIG. 9C shows an exemplary flowchart for the operation of the face/eyes tracking by the camera 204. In step 620, the camera position controller 611 can receive pixel locations of face/eyes appearing on an image frame from the face detect module 610. In step 621, position controller 611 can transform the pixel values to physical locations. Position controller 611 can then compare the physical location of the face/eyes to the current physical location of the camera 204 in step 622. Subsequently, in step 623, the camera controller can displace the camera 204 in the horizontal and/or vertical direction so that the difference between the two physical locations is brought to a minimum. The controller can track the physical location of the face/eyes and the camera 204 continuously or at particular intervals, e.g., every 30 seconds.

Discussion now move to FIG. 10, which illustrates an exemplary block diagram of the camera 204 and the display device 202 coupled to a control unit 503. Control unit 503 can be part of the videoconferencing unit 502, or may be a separate module, and can be communicably coupled with other videoconferencing modules 503 such as a processor, video module, network interface, etc. Control unit 503 can be implemented using a microcontroller, a microprocessor, an application specific integrated circuit, software, firmware, etc. It is understood that the control unit 503 can also include memory, volatile and/or non-volatile, such as RAM, ROM, FLASH, etc.

The display device 202 can include a pixel matrix 505, which can be driven by common driver 506 and segment driver 507. The pixel matrix 505 can employ various display technologies, such as OLED, LCD, LED, etc. Drivers 506 and 507 can vary based on the pixel matrix 505 technology. Common driver 506 can be used to activate any of the columns in the pixel matrix 505, while the segment driver can be used to activate any of the rows of the pixel matrix 505. By combining the activation signals from the common driver 506 and the segment driver 507 any pixel in the pixel matrix 505 can be activated. Drivers 506 and 507 can also control the color and intensity of the light emitted by each pixel in the pixel matrix 505. Display controller 508 can provide signals to the common driver and the segment driver 507 which include the pixel location and illumination data. Display controller 508 can receive pixel addresses and corresponding illumination data from the display RAM 509, which, in turn can receive data from the endpoint 502.

Display controller 508 can also receive signals from the control unit 503, which signals can include display state timing. For example, display controller can receive one signal from the control unit 503 instructing the display controller 508 to put the display device in a display state. As discussed before, in this state, the display device 202 can display an image. The display controller 508 can receive another signal from the control unit instructing the display controller to put the display device 202 in transparent state. Upon receiving this signal, the display controller can control the common driver 506 and the segment driver 507 so as to de-illuminate or reset some or all the pixels in the pixel matrix 505. The actual method used to put the display device 202 in transparent state may vary based on the display technology used. For example, for OLED pixels, the display controller 508 can disable one or more current source in the common driver 506. Because OLED pixels are current driven, disabling the current can cause the corresponding pixels to stop illuminating. Display controller 508 can also receive clock synchronization signals from the control unit 503.

Camera 204 can include a CCD sensor 550 for capturing the image of the local participant. Camera controller 554 can communicate with the control unit 503 to receive signals that include shutter open/close signals. Camera 204 can be capable of using a mechanical shutter 555 or an electronic shutter within the CCD 550. Camera controller 554 can also control other modules of the camera such as the sample and hold module 551, analog to digital converter 552, encoder 553, etc. A person skilled in the art will appreciate that camera 204 can be a film camera instead of the shown digital camera.

The above description is illustrative and not restrictive. Many variations of the invention will become apparent to those skilled in the art upon review of this disclosure. The scope of the invention should therefore be determined not with reference to the above description, but instead with reference to the appended claims along with their full scope of equivalents.

## Claims

1. A desktop videoconferencing endpoint comprising:
a substantially transparent display device (202);
a camera (204) substantially located behind a location on the display device (202) where an image of eyes of a far end participant is displayed and/or is displayable; and
a control unit (503) communicably coupled to the display device (202) and the camera (204), the control unit (503) configured to operate the display device (202) to enter a non-display state, and configured to operate the camera (204) to capture an image only while the display device (202) is in the non-display state.

2. The videoconferencing endpoint of claim 1, wherein the control unit (503) is configured to operate the display device (202) to enter a display state, and configured to operate the camera (204) to stop capturing the image while the display device (202) is in the display state, and wherein the display device (202) preferably alternates repeatedly between the display state and the non-display state.

3. The videoconferencing endpoint of claim 1 or 2, wherein all pixels of the display device (202) are de-activated during the non-display state or wherein a subset of pixels located in front of the camera (204) is de-activated during the non-display state.

4. The videoconferencing endpoint of claim 2 or 3, wherein the camera (204) is configured to stop capturing the image while the display device (202) is in a subset of alternating non-display states, and/or wherein the camera (204) is configured to capture the image over a plurality of non-display states.

5. The videoconferencing endpoint of claim 2, 3 or 4, wherein the display device (202) is configured to alternate at rate that is equal to a frame rate of a video being displayed.

6. The videoconferencing endpoint of any preceding claim, wherein the camera (204) is located such that an angle subtended by the camera (204) and the location where the image of the eyes of the far end participant is displayed is less than 5 degrees.

7. The videoconferencing endpoint of any preceding claim, wherein the display device (202) includes organic light emitting diodes, OLEDs.

8. The videoconferencing endpoint of any preceding claim, further comprising a camera positioning mechanism configured to automatically position the camera (204) behind the location on the display device (202) where the image of eyes of the far end participant is displayed.

9. The videoconferencing endpoint of any preceding claim, further comprising an enclosure (210) for enclosing the camera (204), the enclosure (210) configured to substantially block ambient light from falling on the camera (204).

10. A method for videoconferencing using a desktop videoconferencing endpoint (200) comprising a substantially transparent display device (202) and a camera (204) located behind the display device (202), comprising:
alternating the display device (202) between a display state and a non-display state; and
capturing an image with the camera (204) only while the display device (202) is in the non-display state,
wherein the camera (204) is substantially located behind a location on the display device (202) where an image of eyes of a far end participant is displayed and/or is displayable.

11. The method of claim 10, further comprising:
deactivating all the pixels of the display device (202) during the non-display state; or
deactivating only a subset of pixels located in front of the camera (204).

12. The method of claim 10 or 11, wherein capturing is carried out during a subset of alternating non-display state and/or wherein capturing an image comprises capturing an image frame over a plurality of non-display states.

13. The method of claim 10, 11 or 12, wherein the alternating is carried out at a rate equal to a frame rate of a video being displayed.

14. The method of any of claims 10-13, further comprising automatically positioning the camera (204) behind the location on the display device (202) where the image of eyes of the far end participant is displayed and/or is displayable.

15. The method of claim 14, further comprising detecting changes in the location on the display device (202) where the image of the eyes of the far end participant is displayed and/or is displayable and making proportional changes in the location of the camera (204).
